**Europäisches Patentamt**

**European Patent Office**

**Office européen des brevets**

(19)

(11) Numéro de publication: **0 038 313 B1**

(12)

# FASCICULE DE BREVET EUROPEEN

(45) Date de publication du fascicule du brevet:
23.01.85

(51) Int. Cl.⁴: **B 62 J 5/08**

(21) Numéro de dépôt: **81870020.5**

(22) Date de dépôt: **15.04.81**

(54) Source d'éclairage pour une bicyclette, un vélomoteur ou un véhicule analogue.

(30) Priorité: **16.04.80 BE 200248**

(43) Date de publication de la demande:
**21.10.81 Bulletin 81/42**

(45) Mention de la délivrance du brevet:
**23.01.85 Bulletin 85/4**

(84) Etats contractants désignés:
**AT CH DE FR GB IT LI LU NL SE**

(56) Documents cités:
**CH - A - 88 854**
**DE - A - 322 630**
**DE - C - 250 539**
**DE - C - 419 411**
**DK - A - 14 275**
**DK - A - 14 524**
**FR - A - 395 341**
**FR - A - 422 147**
**FR - A - 422 444**
**FR - A - 447 553**
**FR - A - 529 412**
**FR - A - 967 572**
**FR - A - 998 205**
**US - A - 1 411 617**

(73) Titulaire: **Verbiest, Wilfried, Elisabethlaan, 131 A,
B-8300 Knokke (BE)**

(72) Inventeur: **Verbiest, Wilfried, Elisabethlaan, 131 A,
B-8300 Knokke (BE)**

(74) Mandataire: **Pirson, Jean et al, c/o Bureau Gevers, S.A.
rue de Livourne, 7 bte 1, B-1050 Brussels (BE)**

BUNDESDRUCKEREI BERLIN

**Description**

Cette invention concerne une source d'éclairage pour une bicyclette, un vélomoteur ou un véhicule analogue, équipé de pneumatiques, comportant au moins une dynamo montée sur un axe portant une molette d'entraînement agencée pour entrer élastiquement en contact avec la bande médiane du pneumatique et un support pivotant élastiquement par rapport à une armature fixe pour amener ladite molette dans deux positions possibles par rapport au pneumatique.

Un dispositif de ce genre est déjà décrit dans le brevet FR-A-967 572.

Par ailleurs, il est connu du brevet FR-A-998 205 d'alimenter séparément les feux avant et arrière, au moyen de deux sources indépendantes et montées séparément, respectivement à l'avant et à l'airrière du véhicule.

L'invention a pour but de proposer une alimentation simultanée, et de préférence séparée, des feux avant et arrière du véhicule au moyen de deux dynamos montées sur un axe commun portant la molette d'entraînement, permettant ainsi une disposition idéalement équilibrée des éléments entraînés.

A cet effet, par rapport au FR-A-967 572 précité, l'invention est caractérisée en ce que l'armature comprend un hoitier monté sur une fourche du vehicule et en ceque le support comprend une tige traversant le boîtier, avec liberté de rotation, et deux plaquettes reliant chacune ladite tige à une dynamo dont l'axe d'entraînement commun porte ladite molette.

Selon une autre caractéristique de l'invention, une des deux dynamos ou alternateur alimente un feu avant, l'autre un feu arrière du véhicule.

D'autres détails de l'invention ressortiront de la description donnée ci-après, d'une source d'éclairage pour une bicyclette, un vélomoteur ou un véhicule analogue.

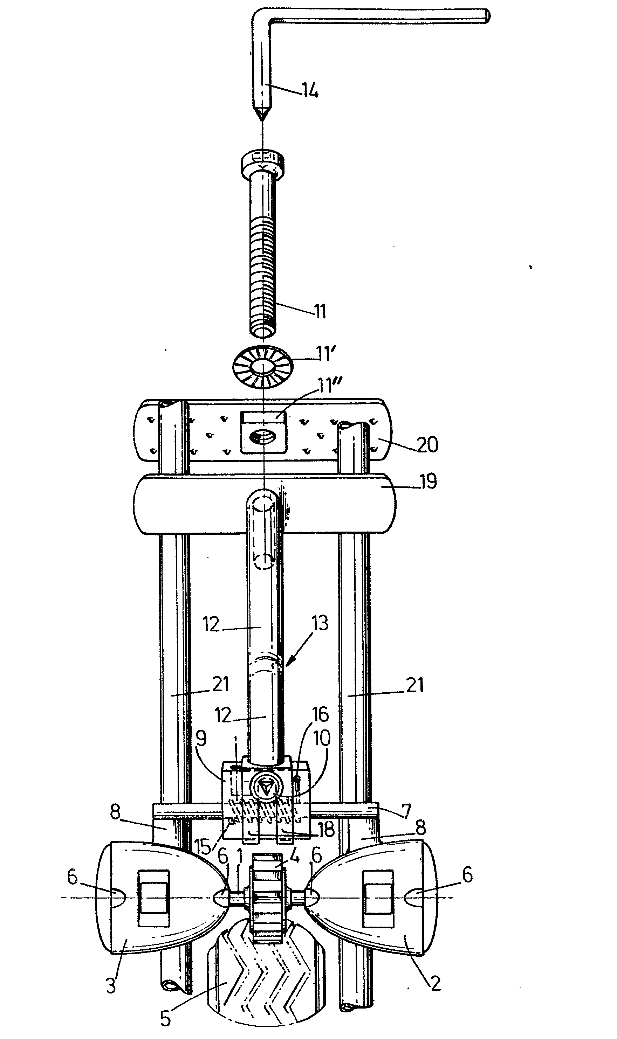

La figure unique présente, partiellement selon une vue explosée, la source d'éclairage selon l'invention et son montage sur la fourche arrière d'un véhicule.

La source d'éclairage selon l'invention comporte deux dynamos 2 et 3 montées sur un axe 1. Entre ces deux dynamos est fixée, sur l'axe 1, une molette d'entraînement 4. Cette molette d'entraînement peut être appliquée élastiquement sur la bande centrale ou surface d'usure du pneumatique 5 du véhicule.

Pour augmenter sensiblement le rendement des dynamos, celles-ci sont montées sur l'axe 1 par l'intermédiaire de roulements 6.

La forme extérieure des deux dynamos est partiellement ovale, parce que ce profil longitudinal s'adapte mieux à l'espace disponible de part et d'autre du pneumatique 5.

Chaque dynamo est prévue pour alimenter une lampe.

Les dynamos 2 et 3 sont supportées et reliées entre elles par une tige 7 pourvue, à ses extrémités de plaquettes 8 qui permettent de relier les dynamos 2 et 3 à la tige en question. La tige 7 traverse un boîtier 9. A ce boîtier 9 est fixé un bras courbe 12, le tout formant ce qu'il est convenu d'appeler l'armature désignée par la référence générale 13. Un boulon 11 traverse une rondelle de serrage 11' et un écrou 11" pour serrer, à l'aide de la clef 14, les plaques 19 et 20 sur les éléments 21 de la fourche arrière du véhicule.

Le serrage du boulon 11 se fait, pour des raisons de sécurité, à l'aide d'une clef allongée 14 ayant une section transversale triangulaire. Cette clef 14 pénètre dans un office axial correspondant du boulon 11.

Un ressort spiralé 15 est disposé autour de la tige 7 et agrippé par une extrémité dans l'orifice 16, tandis que l'autre extrémité du même ressort est fixée à la tige 7. Ceci permet, en fonction de la puissance du ressort 15, une rotation de la tige 7 autour de son axe, à l'intérieur du boîtier 9.

Dans la position de fonctionnement, la molette d'entraînement 4 est appliquée élastiquement contre la surface médiane du pneumatique 5. Dans l'autre position, c'est-à-dire la position de repos, la molette d'entraînement 4 se trouve à une distance du pneumatique 5 et les dynamos ne sont pas entraînées lorsque la molette occupe cette position. La molette d'entraînement 4 est donc maintenue à distance du pneumatique 5, c'est-à-dire dans sa position de repos, par des moyens qui comprennent notamment une petite tige qui peut pénétrer dans un creux de la tige 7 et cela sous l'influence d'une vis de réglage non représentée.

La source d'éclairage proprement dite se fixe sur le bras courbe 12 en bloquant le boîtier 9 à l'aide d'un boulon et d'un écrou 10 sur l'extrémité en forme de fourche 18 du bras 12.

De la description qui vient d'être donnée il résulte clairement que, grâce au couplage de deux dynamos sur un axe commun, on peut alimenter séparément les feux avant et arrière d'un véhicule, de préférence en courant de 6 volts.

La pression exercée par la molette d'entraînement 4 sur le pneumatique 5 est répartie de manière régulière et non pas de façon mal équilibrée comme cela a toujours été le cas jusqu'ici.

Cette construction équilibrée, de même que le fait qu'il est fait usage d'un montage robuste et compacte permet de réaliser une source d'éclairage puissante offrant une sécurité accrue à l'utilisateur de la bicyclette ou du vélomoteur.

Il est entendu que l'invention n'est pas absolument limitée à la forme d'exécution décrite ci-dessus.

**Revendications**

1. Source d'éclairage pour une bicyclette, un vélomoteur ou un véhicule analogue, équipé de pneumatiques, comportant au moins une dynamo (2, 3) montée sur un axe (1) portant une molette d'entraînement (4) agencée pour entrer élastiquement en contact avec la bande médiane du pneumatique (5) et un support (7, 8) pivotant élastiquement par rapport à une armature fixe (9, 12) pour amener ladite molette dans deux positions possibles par rapport au pneumatique, caractérisée en ce que l'armature comprend un boîtier (9) monté sur une fourche du véhicule et en ce que le support comprend une tige (7) traversant le boîtier, avec liberté de rotation, et deux plaquettes (8), reliant chacune ladite tige à une dynamo (2 et 3) dont l'axe d'entraînement commun (1) porte ladite molette (4).

2. Source d'éclairage selon la revendication 1, caractérisée en ce que les moyens élastiques sont constitués par un ressort de rappel spiralé (15) entourant la tige (7), à l'intérieur du boîtier (9), et dont une extrémité est fixée au boîtier (9) et l'autre sur la tige (7).

3. Source d'éclairage selon l'une quelconque des revendications 1—2, caractérisée en ce qu'une des deux dynamos alimente un feu avant, l'autre un feu arrière du véhicule.

## Patentansprüche

1. Beleuchtungsvorrichtung für ein Fahrrad, ein Motorrad oder ähnliches Fahrzeug, das mit Luftreifen versehen ist, enthaltend wenigstens einen Dynamo (2, 3), der auf einer Welle (1) montiert ist, die ein Antriebsrädchen (4) trägt, das dazu eingerichtet ist, elastisch mit dem Mittenband des Luftreifens (5) in Berührung zu gelangen, und einen Träger (7, 8) der elastisch schwenkbar an einem festen Halter (9, 12) gelagert ist, um das Rädchen in zwei möglichen Positionen in bezug auf den Luftreifen zu halten, dadurch gekennzeichnet, daß der Halter ein Gehäuse (9) aufweist, das auf einer Gabel des Fahrzeugs montiert ist und daß der Träger eine Stange (7), die das Gehäuse bei freier Drehung durchquert, und zwei Platten (8) aufweist, die die Stange jeweils mit einem Dynamo (2 und 3) verbinden, deren gemeinsame Antriebsachse (1) das Rädchen (4) trägt.

2. Beleuchtungsvorrichtung nach Anspruch 1, dadurch gekennzeichnet, daß die elastischen Mittel von einer Spiralrückholfeder (15) gebildet sind, die die Stange (7) im Innern des Gehäuses (9) umgibt und deren eines Ende am Gehäuse (9) und deren anderes Ende auf der Stange (7) befestigt ist.

3. Beleuchtungsvorrichtung nach einem der Ansprüche 1 und 2, dadurch gekennzeichnet, daß einer der Dynamos ein Vorderlicht und der andere ein Rücklicht mit Strom versorgen.

## Claims

1. Lighting source for a bicycle, a light motorbike or a similar vehicle, fitted with pneumatic tyres, comprising at least one dynamo (2, 3) mounted on a shaft (1) bearing a driving serrated roller (4) so arranged as to resiliently contact the middle strip of the tyre (5), and a support (7, 8) resiliently swingable relative to a fixed armature (9, 12) to bring said serrated roller in two possible positions relative to the pneumatic tyre, characterized in that the armature comprises a housing (9) mounted on a fork of the vehicle, and in that the support comprises a rod (7) passing through the housing, with rotating freedom, and two small plates (8) each connecting said rod to a dynamo (2 and 3) the common drive shaft (1) of which bears said serrated roller (4).

2. Lighting source according to claim 1, characterized in that the resilient means are comprised of a spiral return spring (15) surrounding the rod (7) inside the housing (9), and one end of which is fastened to the housing (9) and the other one of the rod (7).

3. Lighting source according to any one of claims 1—2, characterized in that one of both dynamos feeds a front light, the other one a back light of the vehicle.

0 038 313